# FASCICULE DE BREVET EUROPEEN

(11) **EP 2 834 086 B1**
(45) Date de publication et mention de la délivrance du brevet: **06.07.2016**
(21) Numéro de dépôt: 13713208.0
(22) Date de dépôt: 02.04.2013
(51) Int. Cl.: B60C 9/00, B60C 9/04

(54) **PNEUMATIQUE COMPORTANT UNE ARMATURE DE CARCASSE DONT LES ELEMENTS DE RENFORCEMENT SONT FORTEMENT PENETRES**
REIFEN MIT EINER KARKASSENVERSTÄRKUNG MIT STARK PENETRIERTEN VERSTÄRKUNGSELEMENTEN
TYRE COMPRISING A CARCASS REINFORCEMENT OF WHICH THE REINFORCING ELEMENTS ARE HIGHLY PENETRATED

(30) Priorité: 06.04.2012 FR 1253194
(43) Date de publication de la demande: 11.02.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: JOHNSON, Philippe, F-63040 Clermont-Ferrand Cedex 9 (FR); NOEL, Sébastien, F-63040 Clermont-Ferrand Cedex 9 (FR)
(74) Mandataire: Le Cam, Stéphane Georges Elie
(86) Numéro de dépôt international: PCT/EP2013/056909
(87) Numéro de publication internationale: WO 2013/150010

(56) Documents cités:
- WO-A1-2005/016668
- WO-A1-2010/139583
- FR-A1- 2 795 751

## Description

La présente invention concerne un pneumatique, à armature de carcasse radiale et plus particulièrement un pneumatique destiné à équiper un essieu comportant des roues jumelées pour des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Par ailleurs, l'usage de pneumatiques sur des véhicules de type poids-lourds à usage routier, notamment lorsqu'ils sont en monte jumelée sur un essieu moteur ou sur des remorques conduit à des utilisations non voulues en mode dégonflé. En effet, les analyses réalisées montrent qu'il est fréquent que des pneumatiques soient utilisés en mode sous-gonflé sans que le chauffeur s'en aperçoive. Des pneumatiques sous-gonflés sont ainsi régulièrement utilisés sur des distances parcourues non négligeables. Le pneumatique ainsi utilisé subit des déformations plus importantes que dans les conditions normales d'utilisation qui peuvent conduire à une déformation des câbles de l'armature de carcasse de type « flambement » qui est fortement pénalisante notamment pour supporter les contraintes liées aux pressions de gonflage.

Afin de limiter ce problème lié au risque de flambement des éléments de renforcement de l'armature de carcasse, il est possible d'utiliser des câbles frettés par un fil supplémentaire entourant le câble pouvant prévenir le flambement du câble, le fil de frette semblant conférer un effet s'opposant au flambement et donc limitant des flexions trop importantes du pneumatique dans certaines zones. Les pneumatiques ainsi réalisés, s'ils présentent moins de risques d'endommagement liés à des roulages à faible pression de gonflage, présentent toutefois des performances en termes d'endurance en flexion atténuées du fait notamment du frottement entre le fil de frette et les fils extérieurs du câble lors des déformations du pneumatique en roulage dans des conditions normales d'utilisation.

Il est encore possible pour pallier à ce problème de flambement des câbles lors de roulage avec un pneumatique sous-gonflé, d'augmenter au moins localement, dans les zones en vis-à-vis de la zone de l'armature de carcasse susceptible de présenter un flambement, l'épaisseur de la couche de caoutchouc qui forme la paroi interne de la cavité du pneumatique. Mais une augmentation, même locale, de l'épaisseur de la couche de caoutchouc séparant l'armature de carcasse de la cavité du pneumatique conduit à un coût du pneumatique plus élevé, le mélange de caoutchouc constituant la paroi interne du pneumatique étant un matériau très onéreux.

Le document WO2005/016668 décrit un pneumatique dont le rapport de la largeur axiale de la bande de roulement sur la largeur axiale maximale du pneumatique est strictement supérieur à 0,89.

Le document WO 2010/139583 décrit des câbles métalliques non frettés, au moins une couche interne étant gainée d'une couche constituée d'une composition polymérique telle qu'une composition de caoutchouc.

Le document FR 2 795 751 décrit des câbles métalliques multicouches non frettés, à couche externe insaturée.

Les inventeurs se sont ainsi donnés pour mission d'être en mesure de fournir des pneumatiques destinés à équiper des véhicules selon une monte jumelée dont le les performances d'endurance dans des conditions de roulage en mode sous-gonflé sont améliorées tout en conservant de performances d'endurance satisfaisantes dans des conditions de roulage normales.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, les éléments de renforcement d'au moins une couche de l'armature de carcasse étant des câbles métalliques multicouches non frettés, à couche externe insaturée, comportant une âme (notée C0) de diamètre d0 entourée d'une couche intermédiaire (notée C1) de quatre à sept fils (M = 4, 5, 6 ou 7) de diamètre d1 enroulés ensemble en hélice selon un pas p1, cette couche C1 étant elle-même entourée d'une couche externe (notée C2) de N fils de diamètre d2 enroulés ensemble en hélice selon un pas p2, N étant inférieur de 1 à 3 au nombre maximal Nmax de fils enroulables en une couche autour de la couche C1, lesdites câbles présentant les caractéristiques suivantes (d0, d1, d2, p1 et p2 en mm):
- (i) 0,14 < d₀ < 0,28 ;
- (ii) 0,12 < d₁ < 0,25 ;
- (iii) 0,12 < d₂ < 0,25 ;
- (iv)
   pour M = 4 : 0,40 < (do/ d₀) < 0,80 ;
   pour M = 5 : 0,70 < (d₀/d₁) < 1,10 ;
   pour M = 6 : 1,10 < (do/ d₁) < 1,40 ;
   pour M = 7 : 1,40 < (d₀/d₁) < 1,70 ;
- (v) 5 π (d₀ + d₀) < p₁ < p₂ < 5 π (d₀ + 2d₁ + d₂) ;
- (vi) les fils des couches C1 et C2 sont enroulés dans le même sens de torsion,
et lesdits câbles présentant au test dit de perméabilité un débit moyen inférieur à 4 cm³/mn, et au moins 2 points à débit nul sur une longueur de 2 cm.

Des câbles dits "à couches" ("*layered cords*") ou "multicouches" sont des câbles constitués d'un noyau central et d'une ou plusieurs couches de brins ou fils pratiquement concentriques disposées autour de ce noyau central.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Les caractéristiques (i) à (vi) ci-dessus, en combinaison, permettent d'obtenir à la fois:
- des forces de contact suffisantes mais limitées entre C0 et C1, favorables à une usure réduite et une fatigue moindre des fils de la couche C1;
- grâce notamment à une optimisation du rapport des diamètres (d₀/ d₁) et des angles d'hélice que forment les fils des couches C1 et C2, une pénétration optimale du caoutchouc à travers les couches C1 et C2 et jusqu'au coeur C0 de ce dernier, assurant d'une part une très haute protection contre la corrosion ou son éventuelle propagation, d'autre part une désorganisation minimale du câble sous sollicitation en forte flexion, ne nécessitant notamment pas la présence d'un fil de frette autour de la dernière couche;
- une usure par fretting réduite entre les fils des couches C1 et C2, ceci malgré la présence de pas différents (p₁ ≠ p₂) entre les deux couches C1 et C2.

Les caractéristiques (v) et (vi) - pas p₁ et p₂ différents et couches C1 et C2 enroulés dans le même sens de torsion - font que, de manière connue, les fils des couches C1 et C2 sont essentiellement disposés selon deux couches cylindriques (i.e. tubulaires), adjacentes et concentriques. Par câbles à couches dites "tubulaires" ou "cylindriques", on entend ainsi des câbles constitués d'une âme (i.e., noyau ou partie centrale) et d'une ou plusieurs couches concentriques, chacune de forme tubulaire, disposée(s) autour de cette âme, de telle manière que, au moins dans le câble au repos, l'épaisseur de chaque couche est sensiblement égale au diamètre des fils qui la constituent ; il en résulte que la section transversale du câble a un contour ou enveloppe qui est sensiblement circulaire.

La couche externe C2 est une couche tubulaire de N fils dite "insaturée" ou "incomplète", c'est-à-dire que, par définition, il existe suffisamment de place dans cette couche tubulaire C2 pour y ajouter au moins un (N+1)ème fil de diamètre d₂, plusieurs des N fils se trouvant éventuellement au contact les uns des autres.

Au sens de l'invention, une couche saturée d'un câble à couches est une couche constituée de fils dans laquelle il n'existe pas suffisamment de place pour y ajouter au moins un fil supplémentaire.

De préférence, le câble de l'invention est un câble à couches de construction notée [1+M+N], c'est-à-dire que son âme C0 est constituée d'un seul fil.

L'invention est ainsi de préférence mise en oeuvre avec un câble choisi parmi les câbles de structure [1+4+8], [1+4+9], [1+4+10], [1+5+9], [1+5+10], [1+5+11], [1+6+10], [1+6+11], [1+6+12], [1+7+11], [1+7+12] ou [1+7+13].

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble. Les mesures sont effectuées sur des éprouvettes de câbles prélevées en trois zones du pneumatique, la zone flanc, la zone sommet et dans la zone environnant le bourrelet du pneumatique. Le débit moyen est déterminé à partir d'une moyenne effectuée sur 10 éprouvettes dans chacune des zones.

Le débit d'air moyen mesuré est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Le nombre de points à débit nul est le nombre de mesures présentant un débit nul parmi les 10 éprouvettes. Ce nombre de points est déterminé dans chacune des zones du pneumatique précitées.

Ce test de perméabilité constitue un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Des câbles présentant au test dit de perméabilité un débit inférieur à 2 cm3/mn présentent un taux de pénétration supérieure à 90%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention, qui présente au moins une couche de l'armature de carcasse constituée de câbles métalliques non frettés à couche externe insaturée présentant au test dit de perméabilité un débit moyen inférieur à 4 cm³/mn, et au moins 2 points à débit nul sur une longueur de 2 cm, conduit à une amélioration de son endurance lors d'un usage en mode sous-gonflé notamment lorsque celui-ci est en monte jumelée sans nuire à ses propriétés d'endurance en roulage dans des conditions normales.

Les inventeurs interprètent ces résultats par un taux de pénétration inhabituellement élevé des câbles métalliques de l'armature de carcasse par des mélanges de caoutchouc qui permet auxdits câbles d'accepter des pliages avec des rayons de courbure relativement faibles sans que ledit câble ou les fils le constituant ne soit altérés. Les inventeurs pensent avoir mis en évidence que la présence d'un taux de pénétration par des mélanges de caoutchouc inhabituellement élevé évite un foisonnement dudit câble c'est-à-dire qu'un écartement des fils constituant le câble est évité lorsque celui-ci est plié avec des rayons de courbure très faibles et prévient ainsi les risques de rupture desdits fils.

Contrairement aux solutions évoquées précédemment qui consistent à limiter la courbure des câbles de l'armature de carcasse du pneumatique lorsque celui-ci est utilisé en mode sous-gonflé, l'invention prévient les risques de rupture des fils constituant le câble, celui-ci subissant tout de même le pliage imposé du fait de la faible pression de gonflage.

En d'autres termes, le pneumatique selon l'invention et plus précisément les éléments de renforcement de son armature carcasse subissent le pliage imposé par un gonflage inapproprié dudit pneumatique et la nature desdits éléments de renforcement, c'est-à-dire la présence de la gaine de caoutchouc autour d'au moins une couche des câbles métalliques, permet d'améliorer l'endurance desdits câbles subissant un tel pliage et en conséquence d'améliorer l'endurance du pneumatique en mode sous-gonflé.

Les câbles métalliques non frettés tels que définis précédemment selon l'invention sont des câbles habituellement utilisés pour réaliser des armatures de carcasse. Par contre, le taux de pénétration mesuré habituellement dans ces câbles est nettement inférieur à celui des câbles des pneumatiques selon l'invention. En effet, en usage « normal » des pneumatiques, notamment lorsqu'ils sont gonflés aux pressions nominales, des taux de pénétration inférieurs sont satisfaisants et suffisants en termes de performance d'endurance.

L'obtention de taux de pénétration de ces câbles conformément à l'invention peut être réalisée par tout moyen connu de l'homme du métier. Le choix peut par exemple s'orienter vers des mélanges de caoutchouc plus fluides qui pénétreront plus facilement les câbles lors de la cuisson du pneumatique. Il est encore par exemple possible d'augmenter la pression dans le moule lors de la cuisson du pneumatique. Il peut encore par exemple s'agir d'une combinaison de ces moyens. Par contre il s'avère qu'une augmentation du taux de pénétration des câbles s'accompagne d'un coût de fabrication du pneumatique plus important, le choix des mélanges étant plus onéreux et l'augmentation de la pression s'accompagnant de coût énergétique plus important.

L'invention conduit donc à un compromis coût de fabrication et performance en endurance notamment dans des situations de sous-gonflage lors d'une utilisation en monte jumelée décalé par rapport au compromis des pneumatiques usuels du fait d'un choix plus orienté vers un compromis coût et endurance du pneumatique dans des conditions normales d'utilisation. Ce dernier choix correspondant aux taux de pénétration des câbles par les mélanges caoutchouteux plus usuels et inférieurs à ceux définis selon l'invention.

Les propriétés d'endurance étant ainsi améliorées, pour augmenter la durée d'utilisation des pneumatiques avant rechapage, les concepteurs desdits pneumatiques cherchent naturellement à améliorer les propriétés d'usure des pneumatiques.

Afin d'augmenter la durée d'utilisation des pneumatiques, il est usuel de choisir des matériaux polymériques constitutifs de la bande de roulement présentant des propriétés de résistance en usure améliorées. Toutefois, de tels matériaux pénalisent le plus souvent les propriétés hystérétiques du pneumatique et leur utilisation n'est pas forcément optimale en termes de propriétés d'endurance pour les raisons énoncées précédemment.

Sachant par ailleurs que la durée de vie liée à l'usure du pneumatique dépend du volume de mélange des matériaux polymériques constitutifs de la bande de roulement à user, les inventeurs ont cherché à augmenter celui-ci.

Les inventeurs ont tout d'abord mis en évidence qu'une augmentation du volume de mélange des matériaux polymériques constitutifs de la bande de roulement selon la direction radiale conduit à des modifications des rigidités du pneumatique qui vont notamment à l'encontre des performances du pneumatique en termes de vitesse d'usure de la bande de roulement.

Ensuite, ils ont su mettre en évidence qu'une augmentation du volume de mélange des matériaux polymériques constitutifs de la bande de roulement selon la direction axiale a un impact positif sur les rigidités du pneumatique ainsi que sur la vitesse d'usure de la bande de roulement.

Les inventeurs proposent ainsi selon une variante avantageuse de l'invention un pneumatique dont le rapport de la largeur axiale de la bande de roulement sur la largeur axiale maximale du pneumatique est strictement supérieur à 0,85 et dont les éléments de renforcement d'au moins une couche de l'armature de carcasse sont des câbles métalliques non frettés.

La largeur axiale de la bande de roulement est mesurée entre deux extrémités d'épaulement lorsque le pneumatique est monté sur sa jante de service et gonflé à sa pression nominale.

Une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

Un tel pneumatique réalisé selon ce mode de réalisation avantageux de l'invention offre un compromis entre les performances d'endurance et d'usure améliorée y compris dans des conditions de roulage en mode sous-gonflé.

Le pneumatique ainsi réalisé selon l'invention combine, comparé à un pneumatique usuel de même dimension, une largeur axiale de la bande de roulement plus importante et au moins une couche de l'armature de carcasse constitués de câbles métalliques non frettés à couche externe insaturée présentant au test dit de perméabilité un débit moyen inférieur à 4 cm3/mn, et au moins 2 points à débit nul sur une longueur de 2 cm. Il permet d'améliorer son endurance lors d'un usage en mode sous-gonflé notamment lorsque celui-ci est en monte jumelée sans nuire à ses propriétés d'endurance en roulage dans des conditions normales, ses propriétés en termes d'usure étant par ailleurs améliorées.

Comme expliquée précédemment l'élargissement selon la direction axiale de la bande de roulement permet d'améliorer les propriétés d'usure du pneumatique.

Par ailleurs, bien que la bande de roulement du pneumatique soit élargie comme expliqué précédemment les câbles métalliques non frettés à couche externe insaturée présentant au test dit de perméabilité un débit moyen inférieur à 4 cm3/mn, et au moins 2 points à débit nul sur une longueur de 2 cm, de l'armature de carcasse permettent d'améliorer significativement les propriétés d'endurance de l'armature de carcasse lorsque le pneumatique est utilisé dans des conditions de faible gonflage sans nuire à ses propriétés d'endurance en roulage dans des conditions normales.

Les inventeurs ont en effet encore su mettre en évidence que le phénomène de flambement précédemment décrit en cas de sous-gonflage du pneumatique est exacerbé avec l'élargissement selon la direction axiale des bandes de roulement des pneumatiques. Toutefois, comparé à un pneumatique usuel, le choix des câbles métalliques non frettés à couche externe insaturée présentant au test dit de perméabilité un débit moyen inférieur à 4 cm3/mn, et au moins 2 points à débit nul sur une longueur de 2 cm, de l'armature de carcasse permet de conserver des performances d'endurance en mode sous-gonflé tout à fait satisfaisantes.

Selon un mode de réalisation préférée de l'invention, le rapport d'aspect H/S est strictement supérieur à 0,55, et de préférence supérieur à 0,60.

Le rapport d'aspect H/S est le rapport de la hauteur H du pneumatique sur jante sur la largeur axiale maximale S du pneumatique, lorsque ce dernier est monté sur sa jante de service et gonflé à sa pression nominale. La hauteur H, est définie comme la différence entre le rayon maximal de la bande de roulement et le rayon minimal du bourrelet.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'exemples de réalisation de l'invention en référence aux figures 1 à 3 qui représentent :
- figure1, une vue méridienne d'un schéma d'un pneumatique selon l'invention,
- figure 2, une vue méridienne d'un schéma d'une partie du pneumatique de la figure 1 pour illustrer la détermination d'une extrémité d'épaulement,
- figure 3, une représentation schématique d'une vue en coupe d'un premier d'un câble d'armature de carcasse du pneumatique de la figure 1.

Les figures ne sont pas représentées à l'échelle pour en simplifier la compréhension.

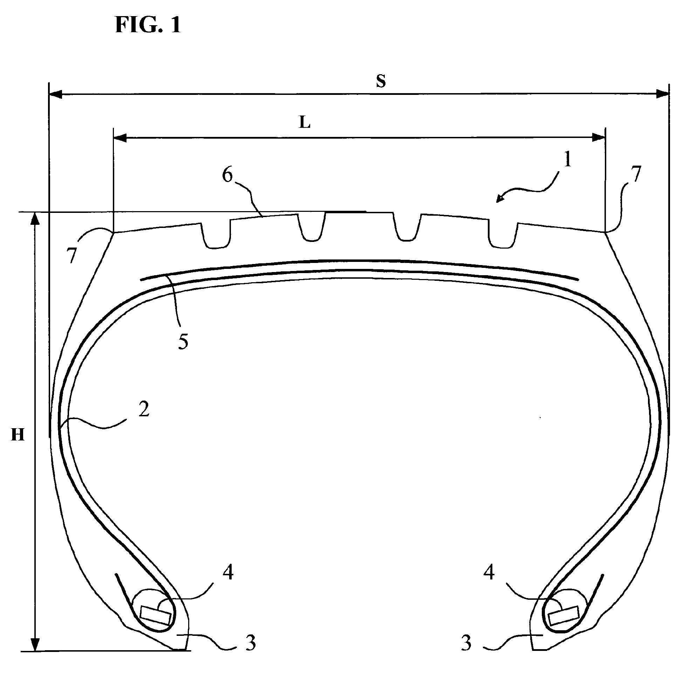

Sur la figure 1, le pneumatique 1, de dimension 315/70 R 22.5, a un rapport de forme H/S égal à 0,70, H étant la hauteur du pneumatique 1 sur sa jante de montage et S sa largeur axiale maximale. Ledit pneumatique comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6.

L'armature de sommet 5 est formée radialement de l'intérieur à l'extérieur :
- d'une couche de triangulation formée de câbles métalliques inextensibles 9.35 non frettés, continus sur toute la largeur de la nappe, orientés d'un angle égal à 65°,
- d'une première couche de travail formée de câbles métalliques inextensibles 11.35 non frettés, continus sur toute la largeur de la nappe, orientés d'un angle égal à 18°,
- d'une seconde couche de travail formée de câbles métalliques inextensibles 11.35 non frettés, continus sur toute la largeur de la nappe, orientés d'un angle égal à 18° et croisés aux câbles métalliques de la première couche de travail,
- d'une couche de protection formée de câbles métalliques élastiques 6.35 non frettés, continus sur toute la largeur de la nappe, orientés d'un angle égal à 18° dans le même sens que les câbles métalliques de la seconde couche de travail.

L'ensemble de ces couches n'est pas représentée de manière détaillée sur les figures.

La largeur axiale L de la bande de roulement du pneumatique est mesurée entre les deux extrémités d'épaulement 7. La largeur L est égale à 290 mm.

Conformément à l'invention, le rapport de la largeur axiale L de la bande de roulement du pneumatique 1 sur sa largeur axiale maximale S est égal à 0.92 et donc bien supérieure à 0.85.

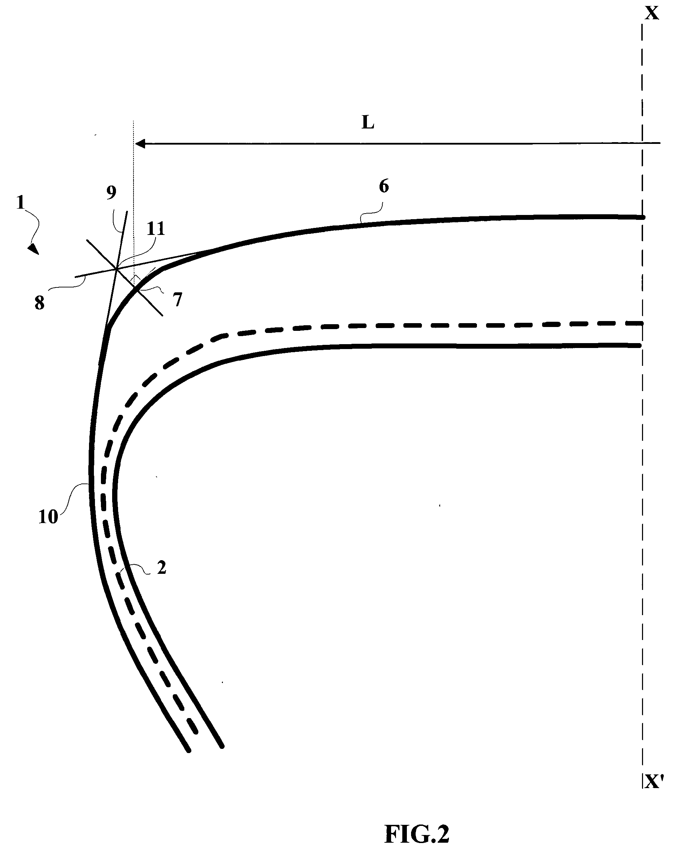

La figure 2 représente une vue méridienne partielle d'un schéma d'un pneumatique 1 dont les extrémités d'épaulement 7 ne sont pas aussi clairement apparentes que sur le schéma de la figure 1. La figure 2 ne représente notamment qu'une demi-vue d'un pneumatique qui se prolonge de manière symétrique par rapport à l'axe XX' qui représente le plan médian circonférentiel, ou plan équatorial, d'un pneumatique.

La figure 2 illustre comment les extrémités d'épaulement 7 peuvent être déterminées. Sur la figure 2 on observe ainsi une première tangente 8 à la surface d'une extrémité axialement extérieure de la bande de roulement 6 ; la surface de la bande de roulement est définie par la surface radialement extérieure ou sommet des sculptures. Une seconde tangente 9 à la surface de l'extrémité radialement extérieure d'un flanc 10 coupe la première tangente 8 en un point 11. La projection orthogonale de ce point 11 sur la surface extérieure du pneumatique définit l'extrémité d'épaulement 7.

Conformément à l'invention, l'armature de carcasse 2 est réalisée avec des câbles métalliques multicouches non frettés 31, à couche externe insaturée de formule de structure 1+6+11, non fretté, constitué d'une âme C0 formée d'un fil 32, d'une couche intermédiaire C1 formée de six fils 33 et d'une couche externe C2 formée de onze fils 34.

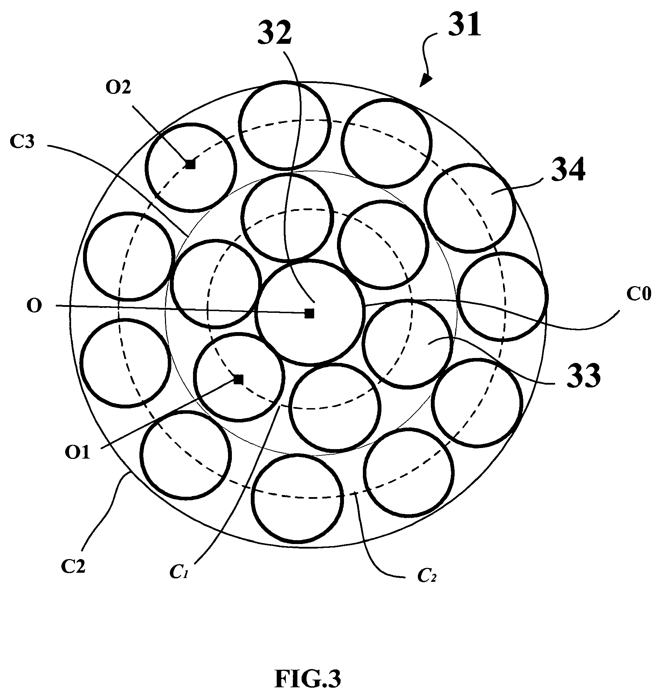

La figure 3 illustre une représentation schématique de la section d'un câble 31 d'armature de carcasse du pneumatique 1 de la figure 1.

Ce câble 31 présente les caractéristiques suivantes (d et p en mm) :
- structure 1+6+11 ;
- d₀ = 0.20 (mm);
- d₁ = 0.18 (mm);
- p₁ = 7 (mm)
- d₂ = 0.18 (mm);
- p₂ = 10 (mm),
- (d₀/ d₁) = 1,11 ;
avec d₂, p₂, respectivement le diamètre et le pas d'hélice de la couche intermédiaire et d₃ et p₃, respectivement le diamètre et le pas de d'hélice des fils de la couche externe.

Cette figure 1 schématise une coupe perpendiculaire à l'axe (noté O) du noyau et du fil 32, le câble 31 étant supposé rectiligne et au repos. On voit que l'âme C0 est formée d'un fil unique 32 (diamètre d₁); il est entouré et au contact d'une couche C1 intermédiaire de 6 fils 33 de diamètre d₁ enroulés ensemble en hélice selon un pas p₁ ; cette couche C1 d'épaisseur sensiblement égale à d₁, est elle-même entourée et au contact d'une couche C2 externe de 11 fils 34 de diamètre d₂ enroulés ensemble en hélice selon un pas p₂, et donc d'épaisseur sensiblement égale à d₂. Les fils enroulés autour de l'âme ainsi disposés selon deux couches adjacentes et concentriques, tubulaires (une première couche C1 d'épaisseur sensiblement égale à d₁, puis une couche externe C2 d'épaisseur sensiblement égale à d₂). On voit que les fils 33 de la couche C1 ont leurs axes (notés O₁) disposés pratiquement sur un premier cercle *C₁* représenté en pointillés, tandis que les fils 34 de la couche externe ont leurs axes (notés O₂) disposés pratiquement sur un second cercle *C₃*, représenté également en pointillés.

Des essais ont été réalisés avec des pneumatiques réalisés selon l'invention conformément à la représentation des figures 1 et 3, et d'autres avec des pneumatiques dits de référence.

Les pneumatiques de référence R1 de dimension 315/70 comme les pneumatiques selon l'invention diffèrent de ceux-ci en ce que leur cuisson est réalisée à une pression supérieure. La pression lors de la cuisson de ces pneumatiques de référence est d'environ 16 bars alors que la pression de cuisson des pneumatiques selon l'invention est de l'ordre de 24 bars.

Le tableau ci-après indique les valeurs obtenues au test dit de perméabilité pour ce qui concerne le débit moyen et le nombre de points à débit nul sur une longueur de 2 cm. Comme expliqué précédemment, ces mesures sont effectuées sur des éprouvettes de câbles prélevées en trois zones du pneumatique, la zone flanc, la zone sommet et dans la zone environnant le bourrelet du pneumatique. Le débit moyen est déterminé à partir d'une moyenne effectuée sur 10 éprouvettes dans chacune des zones.

Le nombre de points à débit nul est le nombre de mesures présentant un débit nul parmi les 10 éprouvettes. Ce nombre de points est également déterminé dans chacune des zones du pneumatique précitées.

| | Test de perméabilité | zone environnant le bourrelet | zone flanc | zone sommet |
|---|---|---|---|---|
| Pneumatique selon l'invention | Débit moyen (cm³/min) | 1,26 | 2,12 | 1,54 |
| | Nombre de points à débit nul sur 2 cm | 5 | 2 | 2 |
| Pneumatique de référence R1 | Débit moyen (cm3/min) | 10,4 | 15,12 | 14,46 |
| | Nombre de points à débit nul sur 2 cm | 0 | 0 | 0 |

Ces mesures mettent en évidence, que dans le pneumatique de référence, Il n'existe pas de bouchons de caoutchouc dans les câbles. En outre, dans les câbles de l'armature de carcasse des pneumatiques selon l'invention, lorsque le débit est non nul, il apparaît qu'il est fortement réduit par rapport aux câbles de l'armature de carcasse des pneumatiques de Référence R1.

Ces observations traduisent une pénétration plus importante des câbles de l'armature de carcasse des pneumatiques selon l'invention par le caoutchouc comparée à celle des câbles de l'armature de carcasse des pneumatiques de Référence R1.

Les essais ont consistés à reproduire un roulage de pneumatiques jumelés dont l'un des pneumatiques est dans un état sous-gonflé. Pour cela, les deux types de pneumatiques, les pneumatiques selon l'invention et les pneumatiques de référence R1, sont testés en monte jumelée, l'un étant gonflé à 0.4 bar et donc à une faible pression et l'autre à 7 bars. Les conditions de gonflage sont rigoureusement les mêmes pour les deux types de pneumatiques.

Ils effectuent des roulages sur véhicule dans des conditions absolument identiques et reproduisant des roulages usuels suivis par des véhicules de type poids-lourds.

Les roulages sont interrompus régulièrement afin de porter la pression du pneumatique testé de 0,4 à 7 bars puis d'observer les pneumatiques. Le roulage reprend ensuite à 0,4 bar jusqu'au prochain arrêt. L'essai s'achève lorsqu'un endommagement irréversible est détecté sur les éléments de renforcement de l'armature de carcasse.

Les pneumatiques de référence R1 ont ainsi pu parcourir une distance moyenne de 2200 km dans les conditions imposées lors du test.

Concernant les pneumatiques selon l'invention, ils ont parcourus une distance moyenne de 4900 Km.

Les pneumatiques selon l'invention permettent ainsi d'améliorer les propriétés d'endurance pour ce qui concerne des roulages en mode sous-gonflé.

Par ailleurs, la présence d'une bande de roulement élargie permet d'améliorer les performances en termes d'usure des pneumatiques selon l'invention comparés à des pneumatiques présentant une bande de roulement moins large. Les performances en termes d'endurance sont alors conservées pour ce qui concerne des roulages en mode sous-gonflé.

## Revendications

1. Pneumatique (1), à armature de carcasse radiale (2), comprenant une armature de sommet (5), elle-même coiffée radialement d'une bande de roulement (6) réunie à deux bourrelets (3) par l'intermédiaire de deux flancs, les éléments de renforcement d'au moins une couche de l'armature de carcasse étant des câbles métalliques multicouches non frettés (31), à couche externe insaturée, comportant une âme (notée C0) de diamètre d₀ entourée d'une couche intermédiaire (notée C1) de quatre à sept fils (M = 4, 5, 6 ou 7) de diamètre d₁ enroulés ensemble en hélice selon un pas p₁, cette couche C1 étant elle-même entourée d'une couche externe (notée C2) de N fils de diamètre d₂ enroulés ensemble en hélice selon un pas p₂, N étant inférieur de 1 à 3 au nombre maximal Nmax de fils enroulables en une couche autour de la couche C1, lesdits câbles présentant les caractéristiques suivantes (d₀, d₁, d₂, p₁ et p₂ en mm):
- (i) 0,14 < d₀ < 0,28 ;
- (ii) 0,12 < d₁ < 0,25 ;
- (iii) 0,12 < d₂ < 0,25 ;
- (iv)
pour M = 4 : 0,40 < (d₀/ d₁) < 0,80 ;
pour M = 5 : 0,70 < (d₀/ d₁) < 1,10 ;
pour M = 6 : 1,10 < (d₀/ d₁) < 1,40 ;
pour M = 7 : 1,40 < (d₀/ d₁) < 1,70 ;
- (v) 5 π (do+ d₁) < p₁ < p₂ < 5 π (do+ 2d₁ + d₂) ;
- (vi) les fils des couches C1 et C2 sont enroulés dans le même sens de torsion,
**caractérisé en ce que** lesdits câbles (31) présentent au test dit de perméabilité un débit moyen inférieur à 4 cm³/mn, et au moins 2 points à débit nul sur une longueur de 2 cm et **en ce que** le rapport de la largeur axiale L de la bande de roulement sur la largeur axiale maximale S du pneumatique est strictement supérieur à 0,85, ledit test de perméabilité est réalisé sur des câbles extraits directement, par décorticage, des nappes de caoutchouc vulcanisées qu'ils renforcent; le test est réalisé sur 2 cm de longueur de câble, enrobé donc par sa composition de caoutchouc environnante à l'état cuit, de la manière suivante : on envoie de l'air à l'entrée du câble, sous une pression de 1 bar, et on mesure le volume d'air à la sortie, à l'aide d'un débitmètre; les mesures sont effectuées sur des éprouvettes de câbles prélevées en trois zones du pneumatique, la zone flanc, la zone sommet et dans la zone environnant le bourrelet du pneumatique ; le débit moyen est déterminé à partir d'une moyenne effectuée sur 10 éprouvettes dans chacune des zones ; la mesure étant faite avec une précision de ± 0,2 cm³/min, les valeurs mesurées inférieures ou égales à 0,2 cm³/min sont considérées comme nulles; le nombre de points à débit nul est le nombre de mesures présentant un débit nul parmi les 10 éprouvettes, ce nombre de points est déterminé dans chacune des zones du pneumatique précitées.

2. Pneumatique (1) selon la revendication 1, **caractérisé en ce que** le câble de l'invention est un câble à couches (31) de construction notée [1+M+N].

3. Pneumatique (1) selon l'une des revendications précédentes, **caractérisé en ce que** le rapport d'aspect H/S est strictement supérieur à 0,55.

4. Pneumatique (1) selon l'une des revendications précédentes, **caractérisé en ce que** l'armature de sommet (5) est formée d'au moins deux couches de sommet de travail d'éléments de renforcement inextensibles, croisés d'une couche à l'autre en faisant avec la direction circonférentielle des angles compris entre 10° et 45°.

5. Pneumatique selon l'une des revendications précédentes, **caractérisé en ce que** l'armature de sommet comporte encore au moins une couche d'éléments de renforcement circonférentiels.

6. Pneumatique (1) selon l'une des revendications précédentes, **caractérisé en ce que** l'armature de sommet (5) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

7. Pneumatique (1) selon l'une des revendications précédentes, **caractérisé en ce que** l'armature de sommet (5) comporte en outre une couche de triangulation formée d'éléments de renforcement métalliques faisant avec la direction circonférentielle des angles supérieurs à 60°.

## Patentansprüche

1. Luftreifen (1) mit radialer Karkassenbewehrung (2), der eine Scheitelbewehrung (5) enthält, die selbst radial von einem Laufstreifen (6) überlagert wird, der mittels zweier Flanken mit zwei Wülsten (3) verbunden ist, wobei die Verstärkungselemente mindestens einer Schicht der Karkassenbewehrung nicht bandagierte Mehrschicht-Drahtseile (31) mit ungesättigter Außenschicht sind, die einen Kern (mit C0 bezeichnet) mit einem Durchmesser d₀ umgeben von einer Zwischenschicht (mit C1 bezeichnet) aus vier bis sieben Drähten (M = 4, 5, 6 oder 7) mit einem Durchmesser d₁ aufweisen, die gemäß einer Ganghöhe p₁ wendelförmig zusammengewickelt sind, wobei diese Schicht C1 selbst von einer Außenschicht (mit C2 bezeichnet) aus N Drähten mit einem Durchmesser d₂ umgeben ist, die gemäß einer Ganghöhe p₂ wendelförmig zusammengewickelt sind, wobei N um 1 bis 3 kleiner ist als die maximale Anzahl Nmax von in einer Schicht um die Schicht C1 wickelbaren Drähten, wobei die Seile die folgenden Merkmale haben (d₀, d₁, d₂, p₁ und p₂ in mm) :
- (i) 0,14 < d₀ < 0,28;
- (ii) 0,12 < d₁ < 0,25;
- (iii) 0,12 < d₂ < 0,25;
- (iv)
für M = 4: 0,40 < (d₀/d₁) < 0,80;
für M = 5: 0,70 < (d₀/d₁) < 1,10;
für M = 6: 1,10 < (d₀/d₁) < 1,40;
für M = 7: 1,40 < (d₀/d₁) < 1,70;
- (v) 5π (d₀+d₁) < p₁ < p₂ < 5π (d₀+2d₁+d₂) ;
- (vi) die Drähte der Schichten C1 und C2 sind in der gleichen Torsionsrichtung gewickelt,
**dadurch gekennzeichnet, dass** die Seile (31) beim so genannten Permeabilitätstest einen mittleren Durchsatz von weniger als 4 cm³/mn, und mindestens 2 Punkte mit einem Durchsatz Null über eine Länge von 2 cm haben, und dass das Verhältnis der axialen Breite L des Laufstreifens zur maximalen axialen Breite S des Luftreifens strikt größer als 0,85 ist, der Permeabilitätstest an Seilen durchgeführt wird, die direkt durch Schälen aus den vulkanisierten Kautschuklagen entnommen werden, die sie verstärken; der Test über 2 cm Länge Seil, das also von seiner umgebenden Kautschukzusammensetzung im gehärteten Zustand umhüllt ist, folgendermaßen durchgeführt wird: Luft wird an den Eingang des Seils mit einem Druck von 1 Bar geschickt, und das Luftvolumen am Ausgang wird mit Hilfe eines Durchsatzmessers gemessen; die Messungen werden an Seilprüflingen durchgeführt, die in drei Bereichen des Luftreifens entnommen werden, dem Flankenbereich, dem Scheitelbereich und dem den Wulst des Luftreifens umgebenden Bereich; der mittlere Durchsatz wird ausgehend von einem Mittelwert bestimmt, der an 10 Prüflingen in jedem der Bereiche gebildet wird; wobei die Messung mit einer Präzision von ± 0,2 cm³/min durchgeführt wird, die gemessenen Werte niedriger als oder gleich 0,2 cm³/min werden als Null angesehen; die Anzahl von Punkten mit einem Durchsatz Null ist die Anzahl von Messungen, die einen Durchsatz Null unter den 10 Prüflingen aufweisen, diese Anzahl von Punkten wird in jedem der erwähnten Bereiche des Luftreifens bestimmt.

2. Luftreifen (1) nach Anspruch 1, **dadurch gekennzeichnet, dass** das erfindungsgemäße Seil ein Seil mit Schichten (31) eines mit [1+M+N] bezeichneten Aufbaus ist.

3. Luftreifen (1) nach einem der vorhergehenden Ansprüche, **dadurch gekennzeichnet, dass** das Aspektverhältnis H/S strikt größer als 0,55 ist.

4. Luftreifen (1) nach einem der vorhergehenden Ansprüche, **dadurch gekennzeichnet, dass** die Scheitelbewehrung (5) von mindestens zwei Arbeitsscheitelschichten aus nicht dehnbaren Verstärkungselementen gebildet wird, die sich von einer Schicht zur anderen kreuzen und mit der Umfangsrichtung Winkel zwischen 10° und 45° bilden.

5. Luftreifen nach einem der vorhergehenden Ansprüche, **dadurch gekennzeichnet, dass** die Scheitelbewehrung außerdem mindestens eine Schicht von Umfangsverstärkungselementen aufweist.

6. Luftreifen (1) nach einem der vorhergehenden Ansprüche, **dadurch gekennzeichnet, dass** die Scheitelbewehrung (5) radial außen durch mindestens eine zusätzliche so genannte Schutzlage aus so genannten elastischen Verstärkungselementen vervollständigt wird, die bezüglich der Umfangsrichtung mit einem Winkel zwischen 10° und 45° und von gleicher Richtung wie der Winkel ausgerichtet sind, der von den nicht dehnbaren Elementen der Arbeitslage gebildet wird, die ihr radial benachbart ist.

7. Luftreifen (1) nach einem der vorhergehenden Ansprüche, **dadurch gekennzeichnet, dass** die Scheitelbewehrung (5) außerdem eine Triangulationsschicht aufweist, die von metallischen Verstärkungselementen gebildet wird, die mit der Umfangsrichtung Winkel größer als 60° bilden.

## Claims

1. Tyre (1) with a radial carcass reinforcement (2) comprising a crown reinforcement (5), itself capped radially by a tread (6) which is connected to two beads (3) by two sidewalls, the reinforcing elements of at least one layer of the carcass reinforcement being non-wrapped multilayer metal cords (31) with an unsaturated external layer, comprising a core (denoted C0) of diameter d₀ surrounded by an intermediate layer (denoted C1) of four to seven threads (M = 4, 5, 6 or 7) of diameter d₁ wound together in a helix at a pitch p₁, this layer C1 being itself surrounded by an external layer (denoted C2) of N threads of diameter d₂ wound together in a helix at a pitch p₂, N being 1 to 3 less than the maximum number Nmax of threads that can be wound in a layer around the layer C1, the said cords having the following characteristics (d₀, d₁, d₂, p₁ and p₂ being in mm):
- (i) 0.14 < d₀ < 0.28;
- (ii) 0.12 < d₁ < 0.25;
- (iii) 0.12 < d₂ < 0.25;
- (iv)
for M = 4: 0.40 < (d₀/ d₁) < 0.80;
for M = 5:0.70 < (d₀/d₁) < 1.10;
for M = 6:1.10 < (d₀/d₁) < 1.40;
for M = 7:1.40 < (d₀/ d₁) < 1.70;
- (v) 5 π (d₀ + d₁) < p₁ < p₂ < 5 π (d₀ + 2d₁ + d₂);
- (vi) the threads of the layers C1 and C2 are wound in the same direction of twisting,
**characterized in that** the said cords (31) return in what is referred to as the permeability test a mean flow rate less than 4 cm³/min and at least 2 points of zero flow rate over a length of 2 cm and **in that** the ratio of the axial width L of the tread to the maximum axial width S of the tyre is strictly greater than 0.85, said permeability test is carried out on cords extracted directly, by stripping, from the vulcanized rubber plies which they reinforce; the test is carried out on a 2 cm length of cord, coated with its surrounding rubber composition in the cured state, in the following way: air is sent to the inlet of the cord, under a pressure of 1 bar, and the volume of air at the outlet is measured using a flow meter ; the measurements are performed on test specimens of cord taken from three regions of the tyre: the sidewall region, the crown region and in the region surrounding the bead of the tyre ; the flow rate is determined from a mean performed over 10 test specimens in each of the regions ; the measurement being carried out with an accuracy of ±0.2 cm3/min, measured values of less than or equal to 0.2 cm3/min are regarded as zeros ; the number of points with zero flow rate is the number of measurements from the 10 test specimens that return a zero flow rate, this number of points is determined in each of the aforementioned regions of the tyre.

2. Tyre (1) according to claim 1, **characterized in that** the cord of the invention is a layered cord (31) of a construction denoted [1+M+N].

3. Tyre (1) according to one of the preceding claims, **characterized in that** the aspect ratio H/S is strictly greater than 0.55.

4. Tyre (1) according to one of the preceding claims, **characterized in that** the crown reinforcement (5) is formed of at least two working crown layers of inextensible reinforcing elements, crossed from one layer to the other, forming, with the circumferential direction, angles of between 10° and 45°.

5. Tyre according to one of the preceding claims, **characterized in that** the crown reinforcement further comprises at least one layer of circumferential reinforcing elements.

6. Tyre (1) according to one of the preceding claims, **characterized in that** the crown reinforcement is supplemented radially on the outside by at least one additional ply, referred to as a protective ply, of reinforcing elements, called elastic, oriented with respect to the circumferential direction at an angle of between 10° and 45° and in the same direction as the angle formed by the inextensible elements of the working ply radially adjacent to it.

7. Tyre (1) according to any of the preceding claims, **characterized in that** the crown reinforcement (5) further includes a triangulation layer formed from metal reinforcing elements forming angles of more than 60° with the circumferential direction.
